# EUROPÄISCHE PATENTSCHRIFT

(11) **EP 1 902 949 B1**
(45) Veröffentlichungstag und Bekanntmachung des Hinweises auf die Patenterteilung: **11.11.2009**
(21) Anmeldenummer: 06019820.7
(22) Anmeldetag: 21.09.2006
(51) Int. Cl.: B64D 11/06, A47B 5/00

(54) **Falttischanordnung**
Folding table arrangement
Agencement de table pliante

(43) Veröffentlichungstag der Anmeldung: 26.03.2008
(73) Patentinhaber: Lufthansa Technik AG, 22335 Hamburg (DE)
(72) Erfinder: Merensky, Harald, 22359 Hamburg (DE)
(74) Vertreter: Keussen, Christof

(56) Entgegenhaltungen:
- EP-A- 1 172 252
- EP-A- 1 449 709
- EP-A1- 0 621 174
- FR-A- 2 841 510
- US-A1- 2001 000 639

## Beschreibung

Die Erfindung betrifft eine Falttischanordnung.

Falttischanordnungen sind weit verbreitet, insbesondere in Verkehrsmitteln wie beispielsweise Flugzeugen. Sie weisen einen sogenannten Falttisch auf, der von einer Nutzstellung in eine Staustellung verstellt werden kann, in der er aus dem unmittelbaren Bewegungsbereich des Benutzers entfernt ist, beispielsweise während Start und Landung eines Flugzeugs.

Insbesondere in der First oder Business Class kommerzieller Langstreckenflugzeuge ist der Sitzabstand in der Regel so groß, dass für einen Passagier nutzbare Falttische nicht in der Rückenlehne des Vordersitzes angebracht werden können, wie aus den üblichen Sitzkonfigurationen in der Economy Class bekannt. Stattdessen muss ein solcher Falttisch seitlich vor dem Passagiersitz in einer Wand, einem Raumteiler oder einem üblicherweise als Credenza bezeichneten Möbelstück angebracht werden.

FR-A-2841510 offenbart einen Tisch, der seitlich eines Sitzes in senkrechter Position verstaut werden kann. Im verstauten Zustand kann der Tischkasten als Armlehne dienen. EP-A-0 621 174 offenbart einen höhenverstellbaren Tischkasten, der gleichzeitig als Armlehne dient. Die Veränderung der Höhe der Armlehne soll den Zugang zur Sitzfläche erleichtern.

Der Erfindung liegt die Aufgabe zugrunde, eine vielseitig nutzbare und für den Passagier bequem zu handhabende Falttischanordnung zu schaffen.

Die erfindungsgemäße Falttischanordnung weist folgende Merkmale auf:
a) eine Trageinrichtung,
b) einen Tischkasten zur Aufnahme einer Tischplatte in einer im wesentlichen vertikalen Staustellung,
c) der Tischkasten ist höhenverstellbar an der Trageinrichtung angeordnet,
d) eine Tischplatte, die von einer im wesentlichen vertikalen Staustellung in dem Tischkasten in eine im wesentlichen horizontale Nutzstellung verstellbar ist,
e) in der Nutzstellung stützt sich die Tischplatte mit ihrer Unterseite auf dem Tischkasten ab,
**dadurch gekennzeichnet, dass** sie zusätzlich wenigstens einen Tischkastenträger (3) aufweist, der an der Trageinrichtung im Wesentlichen horizontal verschiebbar angeordnet ist, und dass der Tischkasten (5) höhenverstellbar an dem Tischkastenträger (3) angeordnet ist.

Zunächst seien einige im Rahmen der Erfindung verwendete Begriffe erläutert.

Der Begriff Trageinrichtung bezeichnet jegliche Einrichtung, an der der Tisch angebracht werden kann und die die auf den Tisch einwirkenden Kräfte aufnimmt und ableitet. Die Trageinrichtung kann insbesondere als im wesentlichen vertikale Wand ausgebildet sein, beispielsweise die Innenwand eines Flugzeuges, ein Raumteiler zwischen zwei Passagiersitzen, die Wand eines Möbelstücks wie beispielsweise einer sogenannten Credenza oder dergleichen.

An der Trageinrichtung ist ein Tischkasten höhenverstellbar angeordnet. Höhenverstellbar bedeutet, dass seine vertikale Höhe relativ zur Trageinrichtung von einem Benutzer problemlos und ohne zu Hilfenahme von Werkzeug verändert werden kann.

Der Tischkasten dient zur Aufnahme einer Tischplatte in einer im wesentlichen vertikalen Staustellung. In dieser vertikalen Staustellung ist die Tischplatte vorzugsweise im wesentlichen parallel zu der Wand der Trageinrichtung angeordnet. Der Begriff Tischkasten ist funktional zu verstehen und bezeichnet eine Einrichtung, die einerseits an der Trageinrichtung höhenverstellbar angeordnet ist und andererseits die Tischplatte aufnimmt und trägt. Vorzugsweise umschließt der Tischkasten die Tischplatte im Stauzustand wenigstens teilweise, besonders bevorzugt vollständig.

Die Tischplatte ist von der im wesentlichen vertikalen Staustellung in dem Tischkasten in eine im wesentlichen horizontale Nutzstellung verstellbar. Bevorzugt kann sie nach oben aus dem Tischkasten herausgezogen und dann in die horizontale Nutzstellung verschwenkt werden. In der Nutzstellung stützt sich die Tischplatte mit ihrer Unterseite auf dem Tischkasten ab. Dies bedeutet, dass die in der Nutzstellung auf die Tischplatte einwirkenden Kräfte zunächst in den Tischkasten abgeleitet und von dort weiter auf die Trageinrichtung übertragen werden.

Ein Grundgedanke der Erfindung ist es, die Mechanismen für das Herausziehen der Tischplatte aus dem Tischkasten und das Verschwenken in die Nutzstellung einerseits und für die Höhenverstellung des Tisches andererseits dadurch voneinander zu trennen, dass der Tischkasten insgesamt an der Trageinrichtung höhenverstellbar ist. Der Tischkasten nimmt einerseits die Tischplatte in der Staustellung auf, andererseits trägt er sie in der Nutzstellung. Vorzugsweise ist die Tischplatte ansonsten freitragend, leitet also die gesamte auf sie wirkende Kraft in den Tischkasten ab.

Ein besonderer Vorteil der Erfindung ist es, dass die Höhenverstellbarkeit des Tischkastens an der Trageinrichtung so ausgebildet sein kann, dass die Oberkante des Tischkastens (und damit auch die Tischplatte im Nutzzustand) oberhalb der Oberkante der Trageinrichtung (beispielsweise einer Credenza in einem Verkehrsflugzeug) liegt. Die Höhe der Credenza in einem Verkehrsflugzeug ist in der Regel niedriger als oder allenfalls genauso hoch wie die Höhe der Armlehnen des Sitzes. Mitteils eines in der Höhe darüber hinaus verstellbaren Tischkastens ist es möglich, den Tisch (die Tischplatte) im Nutzzustand auch oberhalb der Oberkante der Credenza anzuordnen.

Die Falttischanordnung weist zusätzlich wenigstens einen Tischkastenträger auf, der an der Trageinrichtung im wesentlichen horizontal verschiebbar angeordnet ist, wobei dann der Tischkasten höhenverstellbar an dem Tischkastenträger angeordnet ist.

Es erfolgt somit die mechanische Ankopplung des Tischkastens an die Trageinrichtung nicht direkt, sondern über wenigstens einen (vorzugsweise zwei) separate Tischkastenträger, die zusätzlich eine Verstellbarkeit des gesamten Tischkastens in horizontaler Richtung erlauben.

Zu diesem Zweck sind der oder die Tischkastenträger vorzugsweise auf Gleitschienen an der Trageinrichtung im wesentlichen horizontal verschiebbar angeordnet. Es können Verriegelungen zur Fixierung der horizontalen Position der Tischkastenträger relativ zur Trageinrichtung vorgesehen sein.

Die Höhenverstellung des Tischkastens relativ zu dem Tischkastenträger bzw. der Trageinrichtung kann ebenfalls mittels Gleitschienen erfolgen.

Vorzugsweise weist die Höhenverstellung des Tischkastens eine Fremdkraftunterstützung auf. Dies bedeutet, dass die Fremdkraft das Anheben des Tischkastens gegen die Schwerkraft unterstützt. Die Fremdkraft kann mechanisch oder elektrisch erzeugt werden. Vorzugsweise wird die Fremdkraft durch ein vorgespanntes Federelement wie beispielsweise eine oder mehrere Gasdruckfedern erzeugt.

Die Höhenverstellung des Tischkastens weist vorzugsweise eine Verriegelung zur Höhenfixierung des Tischkastens in wenigstens zwei unterschiedlichen Höhen auf.

Der Tischkasten weist vorzugsweise eine obere Öffnung auf, aus der der Falttisch nach oben herausgezogen werden kann. Nach dem vollständigen Herausziehen ist er in die Nutzstellung verschwenkbar. In der Nutzstellung wird er einerseits durch die Fixierung an der Schwenkachse und andererseits durch das Aufliegen auf der Oberkante des Tischkastens gehalten.

Vorzugsweise weist die Tischplatte wenigstens gegeneinander klappbare Tischplattenteile auf. Die beiden Tischplattenteile sind vorzugsweise durch ein Scharnier miteinander verbunden. In der Staustellung liegen sie gegeneinander geklappt im Tischkasten, in der Nutzstellung können Sie auseinandergeklappt die Tischbreite vergrößern.

Vorzugsweise werden zwei Tischplattenteile im Nutzzustand an ihrer Stoßkante von einem Stützelement unterstützt. Dieses Stützelement ist im Nutzzustand unterhalb dieser Stoßkante angeordnet, im Stauzustand kann es den Tischkasten als Deckel nach oben abschließen.

Zusätzlich zu der horizontale Verschiebbarkeit des gesamten Tischkastens/Tischkastenträgers der Falttisch selbst in der Nutzstellung relativ zum Tischkasten horizontal verschieblich sein kann. Er kann zu diesem Zweck beispielsweise auf Teleskopstangen angeordnet sein.

Eine Ausführungsform der Erfindung wird im folgenden anhand der Zeichnung beschrieben. Darin zeigen:

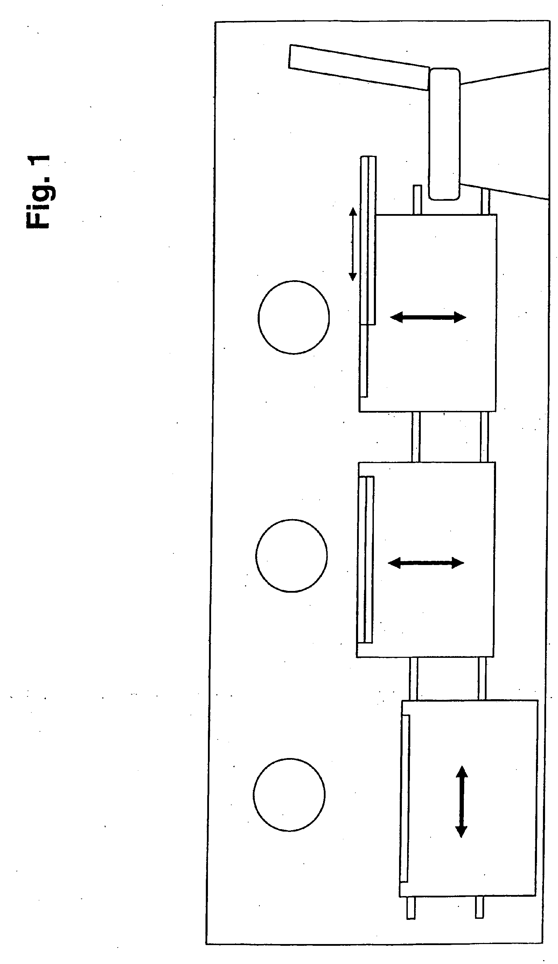

Fig. 1 schematisch die erfindungsgemäße Falttischanordnung in verschiedenen Positionen;
Fig. 2 schematisch einen Horizontal- und Vertikalschnitt durch den Tischkasten;
Fig. 3 in einem Vertikalschnitt die erfindungsgemäße Anordnung im Stau- und Nutzzustand;
Fig. 4 eine Draufsicht auf die erfindungsgemäße Anordnung im Nutzzustand von oben.

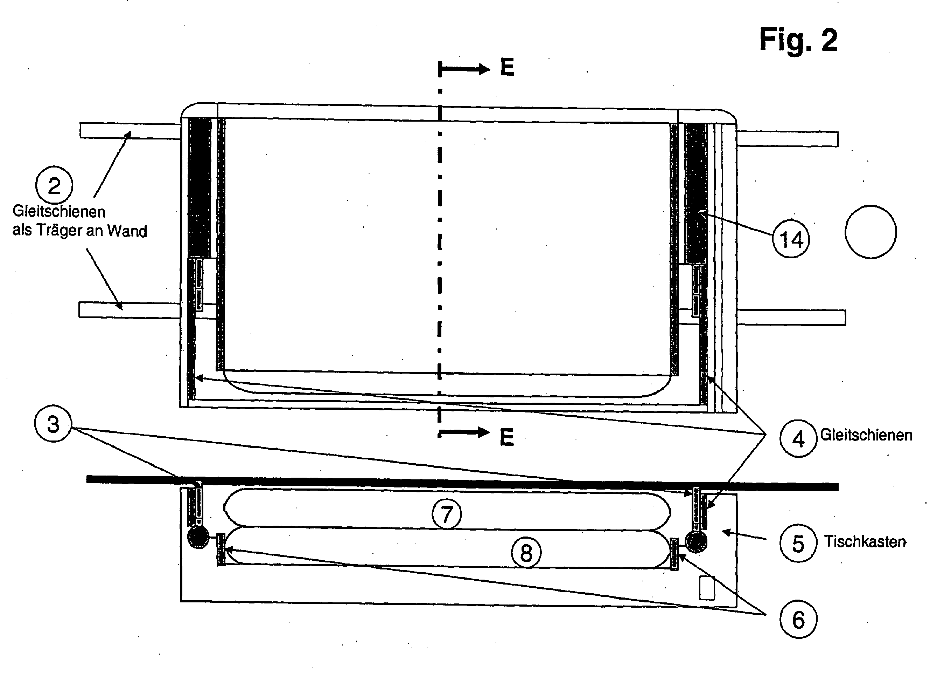

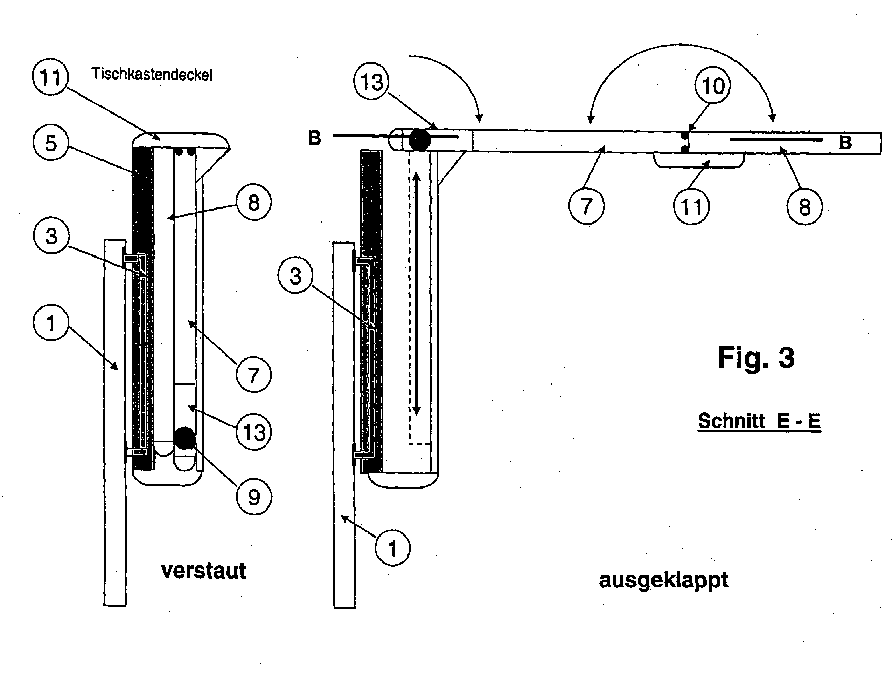

An einer Trageinrichtung (der Wand 1 einer Credenza, siehe Figur 3) sind zwei horizontal verlaufende Gleitschienen 2 angeordnet. In den Gleitschienen sind zwei Tischkastenträger 3 horizontal verschieblich angeordnet. Die Tischkastenträger 3 wiederum wirken zusammen mit in Figur 2 schematisch dargestellten Gleitschienen 4 an der Innenseite des Tischkastens 5. Auf diese Art und Weise ist der Tischkasten 5 relativ zu den Tischkastenträgern 4 vertikal verschieblich.

In dem Tischkasten 5 ist an Gleitschienen 6 (siehe Figur 2) ein Tisch verschieblich angeordnet. Dieser Tisch weist zwei gegeneinander klappbare Tischplattenelemente 7, 8 auf. Das Tischplattenelement 7 weist eine in Figur 3 angedeutete Schwenkachse 9 auf, die Enden dieser Schwenkachse 9 laufen verschieblich in den Gleitschienen 6.

Die beiden Tischplatten 7, 8 sind überein bei 10 angedeutetes Scharnier miteinander verbunden. Ebenfalls an dem Scharnier befestigt ist ein Stützelement 11. Im Nutzzustand unterstützt das Stützelement 11 die beiden Tischplattenhälften 7, 8 an ihrer durch das Scharnier 10 verbundenen Stoßstelle und erhöht somit die Stabilität des Tisches im Nutzzustand. Im Stauzustand schließt das Stützelement 11 den Tischkasten 5 als Deckel nach oben ab.

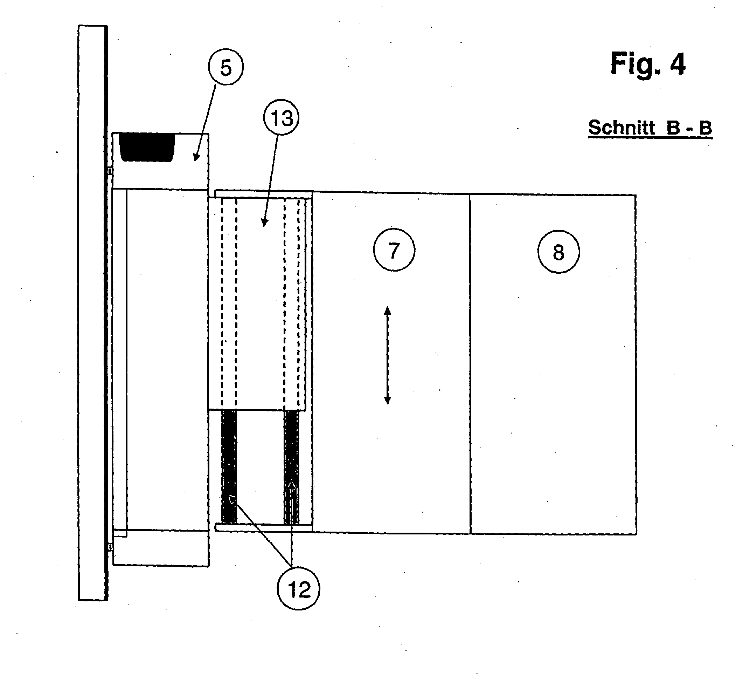

In Figur 4 ist zu erkennen, dass die beiden Tischplattenhälften 7, 8 Teleskopschienen 12 aufweisen, mittels denen sie noch einmal horizontal relativ zum Tischkasten 5 verschieblich sind. Zu diesem Zweck ist ein weiteres verkürztes Tischelement 13 vorgesehen, relativ zu dem die beiden Tischplattenhälften 7, 8 auf den Teleskopschienen 12 verschieblich sind.

Die Benutzung der erfindungsgemäßen Falttischanordnung gestaltet sich wie folgt.

Zunächst befindet sich die Anordnung im Stauzustand. Wenn der Tisch in Benutzung genommen werden soll (beispielsweise nach Erreichen der Reiseflughöhe des Flugzeugs) kann der Passagier diesen Tisch zunächst durch Verschieben des Tischkastens 5 mit den Tischkastenträgern 3 in den Gleitschienen 2 in die gewünschte Horizontalposition verschieben.

Anschließend wird der Tischkasten 5 relativ zu den Tischkastenträgern 3 durch deren Verschieben in den Gleitschienen 4 auf die gewünschte vertikale Höhe eingestellt. In Figur 2 schematisch dargestellte Gasdruckfedern 14 können diesen Vorgang unterstützen, in dem sie eine Gegenkraft zu der Gewichtskraft des Tischkastens mit dem daran angeordneten Tisch aufbringen.

In der gewünschten Höhe kann der Tischkasten 5 durch in der Zeichnung nicht dargestellte Fixiervorrichtungen fixiert werden. Beispielsweise kann zu diesem Zweck ein Verriegelungsstift ein eine Lochleiste eingreifen.

Anschließend wird der Tisch von oben ergriffen und aus dem Tischkasten 5 herausgezogen. Dabei gleiten die entsprechenden Endbereiche der Schwenkachse 9 in den Gleitschienen 6 des Tischkastens 5.

Sobald die Schwenkachse 9 den oberen Endanschlag in den Gleitschienen 6 erreicht hat, kann der Tisch um diese Schwenkachse 9 in die horizontale Nutzstellung verschwenkt werden. Anschließend kann die Tischplattenhälfte 8 gegenüber der Tischplattenhälfte 7 um das Scharnier 10 umgeklappt werden. Der Benutzer kann jetzt noch die beiden Tischplattenhälften 7, 8 auf den Teleskopschienen 12 gegenüber dem Tischkasten 5 weiter horizontal verschieben. Das Verstauen der erfindungsgemäßen Falttischanordnung zurück in die Staustellung findet in umgekehrter Reihenfolge statt.

## Patentansprüche

1. Falttischanordnung, die aufweist:
a) eine Trageinrichtung,
b) einen Tischkasten (5) zur Aufnahme einer Tischplatte (7, 8) in einer im wesentlichen vertikalen Staustellung,
c) der Tischkasten (5) ist höhenverstellbar an der Trageinrichtung angeordnet,
d) eine Tischplatte (7, 8), die von einer im wesentlichen vertikalen Staustellung in dem Tischkasten (5) in eine im wesentlichen horizontale Nutzstellung verstellbar ist,
e) in der Nutzstellung,stützt sich die Tischplatte (7, 8) mit ihrer Unterseite auf dem Tischkasten (5) ab,
**dadurch gekennzeichnet, dass** sie zusätzlich wenigstens einen Tischkastenträger (3) aufweist, der an der Trageinrichtung im Wesentlichen horizontal verschiebbar angeordnet ist, und dass der Tischkasten (5) höhenverstellbar an dem Tischkastenträger (3) angeordnet ist.

2. Falttischanordnung nach Anspruch 1, **dadurch gekennzeichnet, dass** der wenigstens eine Tischkastenträger (3) auf Gleitschienen (2) an der Trageinrichtung im wesentlichen horizontal verschiebbar angeordnet ist.

3. Falttischanordnung nach Anspruch 1 oder 2, **dadurch gekennzeichnet, dass** der Tischkasten (5) auf Gleitschienen (4) an der Trageinrichtung oder dem wenigstens einem Tischkastenträger (3) höhenverstellbar angeordnet ist.

4. Falttischanordnung nach einem der Ansprüche 1 bis 3, **dadurch gekennzeichnet, dass** die Höhenverstellung des Tischkastens (5) eine Fremdkraftunterstützung aufweist,

5. Falttischanordnung nach Anspruch 4, **dadurch gekennzeichnet, dass** die Fremdkraft durch einen Kraftspeicher (14) aufgebracht wird.

6. Falttischanordnung nach einem der Ansprüche 1 bis 3, **dadurch gekennzeichnet, dass** die Höhenverstellung des Tischkastens (5) eine Verriegelung zur Höhenfixierung des Tischkastens (5) in wenigstens zwei unterschiedlichen Höhen aufweist.

7. Falttischanordnung nach einem der Ansprüche 1 bis 6, **dadurch gekennzeichnet, dass** der Falttisch (7, 8) aus der Staustellung nach oben aus dem Tischkasten (5) herausziehbar und in die Nutzstellung schwenkbar ist.

8. Falttischanordnung nach Anspruch 7, **dadurch gekennzeichnet, dass** die Tischplatte wenigstens zwei gegeneinander klappbare Tischplattenteile (7, 8) aufweist.

9. Falttischanordnung nach Anspruch 8, **dadurch gekennzeichnet, dass** zwei Tischplattenteile (7, 8) im Nutzzustand an ihrer Stoßkante von einem Stützelement (11) unterstützt wird, das im Stauzustand den Tischkasten (5) als Deckel nach oben abschließt.

10. Falttischanordnung nach einem der Ansprüche 1 bis 9, **dadurch gekennzeichnet, dass** der Falttisch (7, 8) in der Nutzstellung relativ zum Tischkasten (5) horizontal verschieblich ist.

## Claims

1. A folding-table arrangement which has:
a) a supporting device,
b) a table housing (5) to accommodate a table top (7,8) in a substantially vertical stowed position,
c) the table housing (5) is arranged in a vertically adjustable manner on the supporting device, and
d) a table top (7,8) which is adjustable from a substantially vertical stowed position in the table housing (5) into an substantially horizontal use position,
e) in the use position the table top (7,8) is supported with its underside on the table housing (5),
**characterised in that** additionally it has at least one table-housing carrier (3) which is arranged so as to be displaceable substantially horizontally on the supporting device, and **in that** the table housing (5) is arranged in a vertically adjustable manner on the table-housing carrier (3).

2. A folding-table arrangement according to Claim 1, **characterised in that** the at least one table-housing carrier (3) is arranged so that it can be displaced substantially horizontally on slide rails (2) on the supporting device.

3. A folding-table arrangement according to Claim 1 or 2, **characterised in that** the table housing (5) is arranged in a vertically adjustable manner on slide rails (4) on the supporting device or on the at least one table-housing carrier (3).

4. A folding-table arrangement according to any one of Claims 1 to 3, **characterised in that** the vertical adjustment of the table housing (5) has external force assistance.

5. A folding-table arrangement according to Claim 4, **characterised in that** the external force is applied by an energy-storage mechanism.

6. A folding-table arrangement according to any one of Claims 1 to 3, **characterised in that** the vertical adjustment of the table housing (5) has a lock for fixing the height of the table housing (5) at at least two different heights.

7. A folding-table arrangement according to any one of Claims 1 to 6, **characterised in that** the folding table (7,8) can be pulled upwards out of the table housing (5) from the stowed position and pivoted into the use position.

8. A folding-table arrangement according to Claim 7, **characterised in that** the table top has at least two table-top parts (7,8) which can be folded together.

9. A folding-table arrangement according to Claim 8, **characterised in that,** in the use position, two table-top parts (7, 8) are supported at their abutment edges by a supporting element (11) which, in the stowed position, upwardly closes off the table housing (5) as a cover.

10. A folding-table arrangement according to any one of Claims 1 to 9, **characterised in that**, in the use position, the folding table (7, 8) is displaceable horizontally relative to the table housing (5).

## Revendications

1. Agencement de table pliante qui présente :
a) un dispositif de support,
b) un caisson de table (5) pour recevoir un plateau de table (7, 8) dans un repliement essentiellement vertical,
c) le caisson de table (5) disposé réglable en hauteur sur dispositif de support,
d) un plateau de table (7, 8) qui peut être amené d'une position repliée essentiellement verticale à une position d'utilisation essentiellement horizontale,
e) dans la position d'utilisation le plateau de table (7, 8) s'appuie par sa face inférieure sur le caisson de table (5),
**caractérisé en ce qu'**il présente en outre au moins un support de caisson de table (3) qui peut être monté sur le dispositif de support de façon à pouvoir coulisser essentiellement horizontalement et **en ce que** le caisson de table (5) est disposé réglable en hauteur sur le support de caisson de table (3).

2. Agencement de table pliante selon la revendication 1, **caractérisé en ce que** le au moins un support de caisson de table (3) est disposé de façon à pouvoir coulisser essentiellement horizontalement sur des rails de glissière (2) sur le dispositif de support.

3. Agencement de table pliante selon la revendication 1 ou 2, **caractérisé en ce que** le caisson de table (5) réglable en hauteur sur des rails de glissière (4) sur le dispositif de support ou le support de caisson de table (3).

4. Agencement de table pliante selon l'une des revendications 1 à 3, **caractérisé en ce que** le réglage en hauteur du caisson de table (5) présente l'intervention d'une force extérieure.

5. Agencement de table pliante selon la revendication 4, **caractérisé en ce que** la force extérieure est fournie par un accumulateur (14).

6. Agencement de table pliante selon l'une des revendications 1 à 3, **caractérisé en ce que** le réglage en hauteur du caisson de table (5) présente un verrouillage pour la fixation en hauteur du caisson de table (5) dans au moins deux hauteurs différentes.

7. Agencement de table pliante selon l'une des revendications 1 à 6, **caractérisé en ce que** la table pliante (7, 8) est sortie vers le haut de la position repliée dans le caisson (5) et basculée en position d'utilisation.

8. Agencement de table pliante selon la revendication 7, **caractérisé en ce que** le plateau de table présente au moins deux parties de plateau (7, 8) rabattables l'une contre l'autre.

9. Agencement de table pliante selon la revendication 8, **caractérisé en ce que** les deux parties de plateau (7, 8) sont soutenues sur leurs bords en butée, à l'état d'utilisation, par un élément d'appui (11) qui ferme le caisson de table (5) comme un couvercle à l'état replié.

10. Agencement de table pliante selon l'une des revendications 1 à 9, **caractérisé en ce que** la table pliante (7, 8) peut coulisser horizontalement par rapport au caisson de table (5) en position d'utilisation.
